# EUROPÄISCHE PATENTSCHRIFT

(11) **EP 0 750 145 B1**
(45) Veröffentlichungstag und Bekanntmachung des Hinweises auf die Patenterteilung: **13.11.2002**
(21) Anmeldenummer: 96109568.4
(22) Anmeldetag: 14.06.1996
(51) Int. Cl.: F16K 11/078, F16K 39/04

(54) **Sanitäres Wasserventil**
Sanitary water valve
Robinet d'eau sanitaire

(30) Priorität: 19.06.1995 DE 19522098
(43) Veröffentlichungstag der Anmeldung: 27.12.1996
(73) Patentinhaber: Ideal-Standard GmbH & Co. OHG, 53121 Bonn (DE)
(72) Erfinder: Schneider, Hermann-Josef, 54338 Schweich (CH)
(74) Vertreter: Müller, Karl-Ernst, Dr., Dipl.-Ing.

(56) Entgegenhaltungen:
- EP-A- 0 382 040
- EP-A- 0 521 782
- DE-A- 4 425 393
- DE-U- 9 306 211
- US-A- 4 751 943

## Beschreibung

Die Erfindung bezieht sich auf ein sanitäres Wasserventil, in der Form einer Einhebel-Mischbatterie oder auch einer Zweigriff-Mischbatterie, entsprechend den in den Oberbegriffen von Anspruch 1 und 2 definierten Merkmalen.

Sanitäre Wasserventile mit scheibenförmigen Steuerelementen der vorgenannten Art sind seit langem bekannt. Zur Verringerung der Scheibenpressung aufeinander und damit zur Reduzierung der Betätigungskräfte werden über bestimmte Flächenverhältnisse hydraulische Gegenkräfte wirksam, wodurch der Anpreßdruck auf die feste Scheibe teilweise kompensiert wird. Diese Art der Reduzierung der Betätigungskräfte kommt bisher insbesondere im geöffnetem Zustand des Wasserventils zur Wirkung.

In der DE-U-93 06 211, in der EP-A-521 782 sowie in der EP-A-382 040 werden weiterhin gattungsgemäße Wasserventile beschrieben, bei denen in der Dichtfläche der ersten unbeweglichen Scheibe mit der Dichtfläche der beweglichen Scheibe taschenförmige Kammern ausbildende Vertiefungen mit unterschiedlichen hydraulischen Wirkungen angeordnet sind. Eine Reduzierung der Betätigungskräfte jedoch ist in diesen Druckschriften nicht angesprochen und im übrigen auch mit den in der unbeweglichen Scheibe angeordneten Vertiefungen nicht erreichbar.

Insoweit hat es sich gezeigt, daß bei den bekannten Ausführungen die Betätigungskräfte zum Öffnen des Wasserventils noch relativ hoch sind, in der Regel jedenfalls deutlich höher als die Betätigungskräfte, die in geöffnetem Zustand des Wasserventils zu überwinden sind.

Der Erfindung liegt daher die Aufgabe zugrunde, bei einem sanitären Wasserventil der eingangs genannten Art die Betätigungskräfte zum Öffnen des Wasserventils deutlich zu reduzieren, und zwar mit einer konstruktiven Lösung, die ohne Mehrkosten leicht herstellbar und sicher in der Wirkugnsweise ist.

Die Lösung dieser Aufgabe ergibt sich einschließlich vorteilhafter Ausgestaltungen der Erfindung aus dem Inhalt der Patentansprüche, welche dieser Beschreibung nachgestellt sind.

Erfindungsgemäß können die Betätigungskräfte zum Öffnen des sanitären Wasserventils deutlich reduziert werden. Die dabei wirksamen hydraulischen Gegenkräfte sollen erfindungsgemäß vorzugsweise auch im geöffneten Zustand des sanitären Wasserventils zur weiteren Erhöhung des Bedienungskomforts zum Einsatz kommen. Die erste Scheibe kann unverändert in der Ausführung, also von herkömmlicher Gestaltung sein; sie kann aber auch zusätzlich zu den erfindungsgemäß in der Dichtfläche der beweglichen Scheibe vorgesehenen Vertiefungen selbst entsprechende Vertiefungen aufweisen.

In der Zeichnung ist ein Ausführungsbeispiel der Erfindung wiedergegeben, welches nachstehend beschrieben ist. Es zeigen:

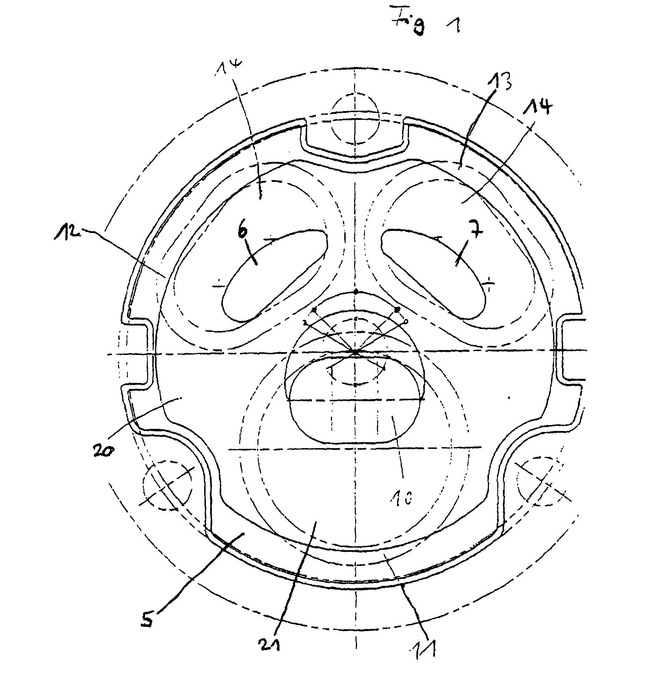

- ***Fig. 1:***: eine erste Scheibe in der Draufsicht

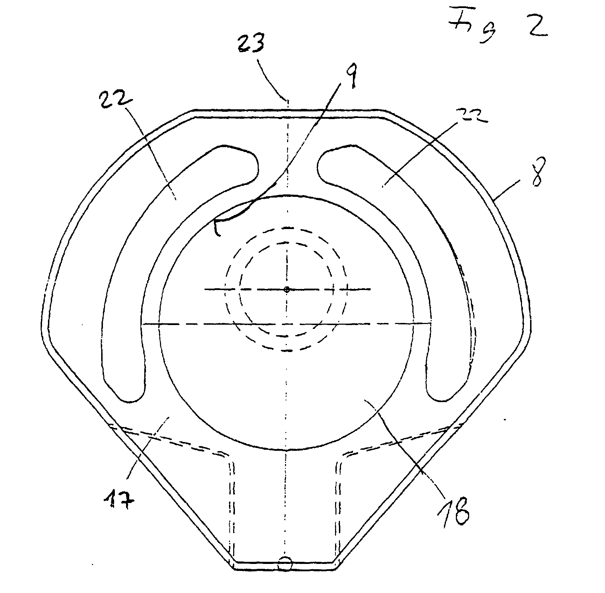

- ***Fig. 2:***: eine erfindungsgemäße zweite Scheibe in der Draufsicht

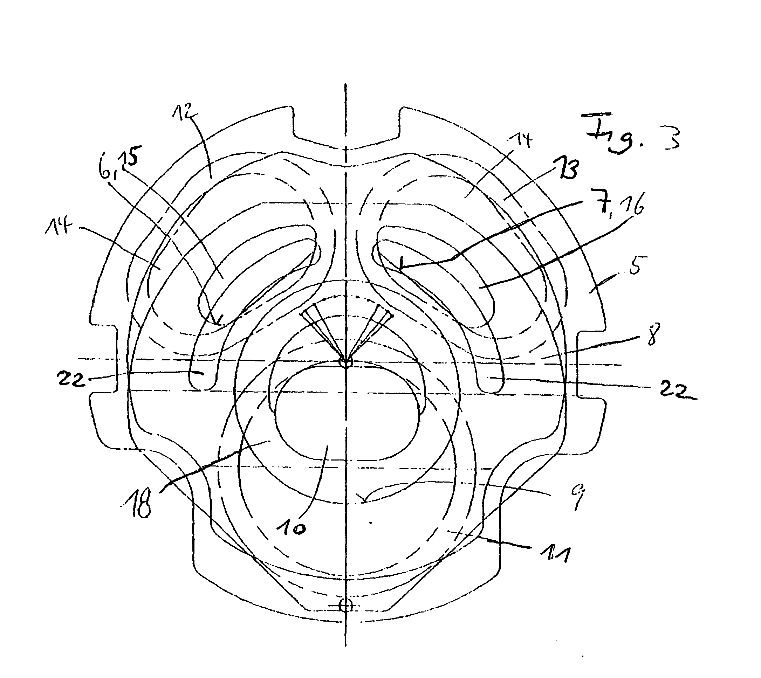

- ***Fig. 3:***: die Scheiben nach den Fig. 1 und 2 in gegenseitiger Anlage als Scheibenpaar in Mittelstellung geschlossen,

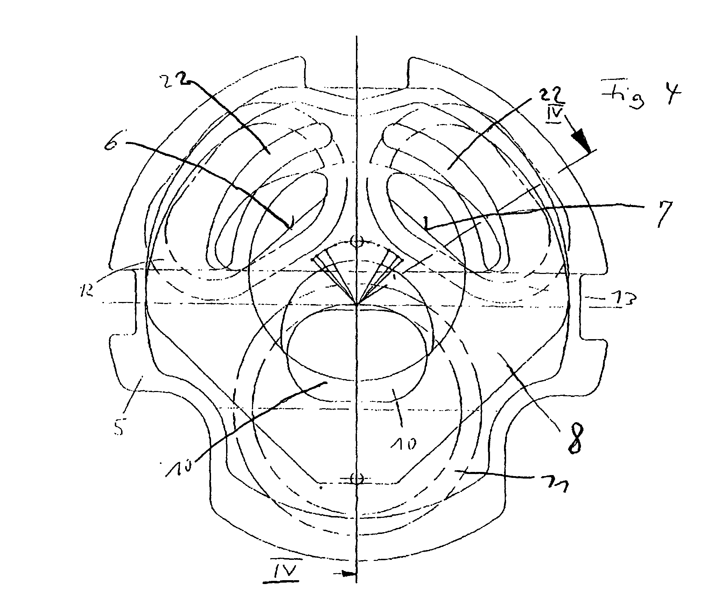

- ***Fig. 4:***: das Scheibenpaar in Mittelstellung geöffnet und

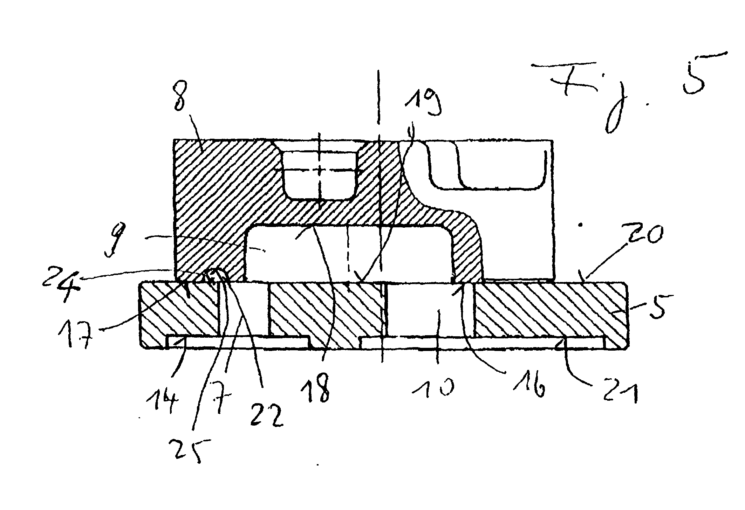

- ***Fig. 5:***: das Scheibenpaar im Schnitt gemäß der Linie IV-IV der Fig. 4.

Darin ist mit 5 die erste Dichtscheibe bezeichnet. Sie ist von herkömmlicher Ausführung, unbeweglich angeordnet und hat zwei Einiaßöffnungen 6 und 7 für warmes bzw. kaltes Wasser. Die Einlaßöffnungen 6 und 7 sind auf der einen Seite an Wasserzuläufe angeschlossen und auf der anderen Seite gegen eine zweite Scheibe 8 als Steuerscheibe gerichtet. Die zweite Scheibe 8 ist auf der ersten Scheibe 5 beweglich und besitzt einen Oberflächenkanal 9 für Umlenkfunktionen, der gleichzeitig mit den Einlaßöffnungen 6 und 7 und einer ebenfalls in der ersten Scheibe 5 befindlichen Auslaßöffnung 10 in Überdeckung bringbar ist. Der Anschluß der Auslaßöffnung 10 und der Einlaßöffnungen 6 und 7 an den Wasserauslauf und die Wasserzuläufe des sanitären Wasserventils erfolgt über statische Ringdichtungen 11, 12 und 13, deren Durchmesser größer ist als der freie Querschnitt der jeweiligen Öffnung 10, 6 und 7. Dadurch wird die erste Scheibe 5 im geschlossenen Zustand des Wasserventils über die Vorspannung der Ringdichtungen 11, 12 und 13 gegen die zweite Scheibe 8 gedrückt, wobei die Scheibenpressung aufeinander um die hydraulischen Kräfte erhöht ist, die im von den Ringdichtungen 12 und 13 begrenzten Umgebungsbereich 14 der Einlaßöffnungen 6 und 7 wirksam sind. Dabei ist die Scheibenpressung um die hydraulischen Gegenkräfte reduziert, denen die den freien Querschnitt der Einlaßöffnungen 6 und 7 verschließenden Bereiche 15 und 16 der Dichtfläche 17 der zweiten Scheibe 8 ausgesetzt sind. Im geöffneten Zustand des Wasserventils sind zusätzliche hydraulische Gegenkräfte wirksam, die gegen den Boden 18 des Oberflächenkanals 9 und den von dem Oberflächenkanal 9 begrenzten Bereich 19 der Dichtfläche 20 der ersten Scheibe 5 gerichtet sind. Dabei erfolgt eine Reduzierung um die hydraulischen Kräfte, denen der von der Ringdichtung 11 begrenzte Umgebungsbereich 21 der Auslaßöffnung 10 ausgesetzt ist.

Die Dichtfläche 17 der zweiten Scheibe 8 weist bei dem dargestellten Ausführungsbeispiel der Erfindung zwei Vertiefungen 22 von länglicher Gestalt auf, die in symmetrischer Anordnung zur Mittellinie 23 der zweiten Scheibe 8 vorgesehen sind. Die Vertiefungen 22 erstrecken sich bis in den jeweils aktiven Bereich der Dichtfläche 20 der ersten Scheibe 5 und bilden mit der Dichtfläche 20 taschenförmige Kammern, die zunächst im geschlossenen Zustand des Wasserventils den Zulaufdrücken ausgesetzt sind. Auf diese Weise wird der gesamte auf die erste Scheibe 5 wirksame Anpressdruck, der sich im geschlossenen Zustand aus den Vorspannungskräften der Ringdichtungen 12 und 13 und den einlaufseitigen hydraulischen Kraften zusammensetzt, um die hydraulischen Gegenkräfte reduziert, denen der die Vertiefungen 22 überdeckende Bereich 24 der Dichtfläche 20 der ersten Scheibe 5 sowie der entsprechende Bereich des Bodens 25 der Vertiefungen 22 ausgesetzt sind. Die Vertiefungen 22 sollen im geschlossenen Zustand des Wasserventils zu mindestens 1/3 von der Dichtfläche 20 der ersten Scheibe 5 überdeckt sein.

Die Betätigungskräfte zum Öffnen des Wasserventils sind mit diesen einfachen konstruktiven Mitteln nach der Erfindung erheblich geringer als bei den vorbekannten Ausführungen, wodurch der Bedienungskomfort deutlich erhöht ist. Bei dem gezeigten Ausführungsbeispiel sind die zusätzlichen hydraulischen Gegenkräfte zur Verringerung der Scheibenpressung auch im geöffneten Zustand des Wasserventils wirksam, wodurch eine weitere Verbesserung des Bedienungskomforts gewährleistet ist.

Wie bereits erwähnt, ist die dargestellte und beschriebene Ausführung nur ein Beispiel zur Verwirklichung der Erfindung, und diese ist nicht darauf beschränkt, vielmehr sind im Rahmen des erfindungsgemäßen Grundgedankens auch noch andere Ausführungsmöglichkeiten gegeben. So ist es denkbar, daß taschenförmige Kammern nach der Erfindung auch bei Zweigriffarmaturen mit scheibenförmigen Steuerelementen zum Einsatz kommen können. Ferner können die Vertiefungen äquivalent auch in der unbeweglichen Ventilsitzscheibe vorgesehen sein. Schließlich versteht es sich von selbst, daß erfindungsgemäße taschenförmige Kammern, gebildet aus den Vertiefungen und die diese überdeckenden Dichtflächenbereiche auch bei solchen Einhebel-Mischbatterien zum Einsatz kommen können, bei denen die Ventilsitzscheibe nur die Einlaßöffnungen aufweist, während die Auslaßöffnung in Strömungsrichtung hinter den Einlaßöffnungen in einem die scheibenförmigen Steuerelemente aufnehmenden kartuschenartigen Gehäuse seitlich angeordnet ist. Das zulaufende Wasser strömt bei einer solchen Ausführung, die auch als offenes System bezeichnet wird, da das Wasser nicht wieder über die erste Ventilscheibe als Ventilsitzscheibe zurückströmt, von den Einlaßöffnungen direkt zu der seitlichen Auslaßöffnung des kartuschenartigen Gehäuses, wie es in gleicher Weise bei den genannten Zweigriffarmaturen der Fall ist.

## Patentansprüche

1. Sanitäres Wasserventil, insbesondere Einhebel-Mischbatterie, mit aus mindestens zwei Scheiben (5, 8) gebildeten Steuerelementen, von denen eine erste Scheibe (5) als Ventilsitzscheibe unbeweglich angeordnet ist und Einlaßöffnungen (6, 7) für das kalte und warme Wasser aufweist, die auf der einen Seite an die Wasserzuläufe angeschlossen und auf der anderen Seite gegen eine zweite Scheibe (8) als Steuerscheibe gerichtet sind, welche auf der ersten Scheibe (5) beweglich angeordnet ist und einen Oberflächenkanal (9) für Umlenkfunktionen aufweist, der gleichzeitig mit den Einlaßöffnungen (6, 7) und einer ebenfalls in der ersten Scheibe (5) befindlichen Auslaßöffnung (10) in Überdeckung bringbar ist, wobei der Anschluß der Auslaßöffnung (10) und der Einlaßöffnungen (6, 7) an den Wasserauslauf und die Wasserzuläufe über statische Dichtungen (11, 12, 13) erfolgt, deren Durchmesser größer ist als der freie Querschnitt der jeweiligen Öffnung (10, 6, 7), wodurch im geschlossenen Zustand des Wasserventils die erste Scheibe (5) über die Vorspannung aller Ringdichtungen (11, 12, 13) und die im von den Ringdichtungen begrenzten Umgebungsbereich der Einlaßöffnungen (6, 7) wirksamen hydraulischen Kräfte gegen die zweite Scheibe (8) gedrückt wird, reduziert um die hydraulischen Gegenkräfte, denen die den freien Querschnitt der Einlaßöffnungen (6, 7) verschließenden Bereiche der Dichtfläche (17) der zweiten Scheibe (8) ausgesetzt sind, während im geöffneten Zustand des Wasserventils zusätzliche hydraulische Gegenkräfte wirksam sind, die gegen den Boden des Oberflächenkanals (9) und den von dem Oberflächenkanal (9) begrenzten Bereich der Dichtfläche (20) der ersten Scheibe (5) gerichtet sind, reduziert um die hydraulischen Kräfte, denen der von der Ringdichtung begrenzte Umgebungsbereich der Auslaßöffnung (10) ausgesetzt ist, **dadurch gekennzeichnet, daß** die Dichtfläche (17) der zweiten beweglichen Scheibe (8) eine oder mehrere Vertiefungen (22) aufweist, die sich bis in den jeweils aktiven Bereich der Dichtfläche (20) der ersten unbeweglichen Scheibe (5) erstrecken und mit diesem Dichtflächenbereich (20) taschenförmige Kammern bilden, die mindestens im geschlossenen Zustand des Wasserventils den Zulaufdrücken ausgesetzt sind, wobei der gesamte auf die erste Scheibe (5) wirksame Anpreßdruck durch die hydraulischen Gegenkräfte höchstens kompensiert ist, denen der die Vertiefungen (22) überdeckende Dichtflächenbereich (20) der ersten Scheibe (5) sowie der entsprechende Bodenbereich (25) der Vertiefungen (22) vorzugsweise auch im geöffneten Zustand des Wasserventils ausgesetzt sind.

2. Sanitäres Wasserventil in der Form einer Einhebeloder einer Zweigriff-Mischbatterie mit aus mindestens zwei Scheiben gebildeten Steuerelementen, von'denen eine erste Scheibe als Ventilsitzscheibe unbeweglich angeordnet ist und mindestens eine Einlaßöffnung für das kalte oder warme Wasser aufweist, die auf der einen Seite an den Wasserzulauf angeschlossen und auf der anderen Seite gegen eine zweite Scheibe als Steuerscheibe gerichtet ist, welche auf der ersten Scheibe beweglich angeordnet ist und mindestens eine Auslaßöffnung für das kalte oder warme Wasser aufweist, die mit der Einlaßöffnung in Überdeckung bringbar ist, wobei der Anschluß der Einlaßöffnung an den Wasserzulauf über eine Ringdichtung erfolgt, deren Durchmesser größer ist als der freie Querschnitt der Einlaßöffnung, wodurch im geschlossenen Zustand des Wasserventils die erste Scheibe über die Vorspannung der Ringdichtung und die im von der Ringdichtung begrenzten Umgebungsbereich der Einlaßöffnung wirksame hydraulische Kraft gegen die zweite Scheibe gedrückt wird, reduziert um die hydraulische Gegenkraft, der der den freien Querschnitt der Einlaßöffnung verschließende Bereich der Dichtfläche der zweiten Scheibe ausgesetzt ist, während im geöffneten Zustand des Wasserventils nur bei teilweiser Öffnung desselben hydraulische Gegenkräfte entsprechend der Überdeckung der Einlaßöffnung durch die Dichtfläche der zweiten Scheibe wirksam sind, **dadurch gekennzeichnet, daß** die Dichtfläche der zweiten beweglichen Scheibe eine oder mehrere Vertiefungen aufweist, die sich bis in den jeweils aktiven Dichtflächenbereich der ersten unbeweglichen Scheibe erstrecken und mit diesem Dichtflächenbereich taschenförmige Kammern bilden, die mindestens im geschlossenen Zustand des Wasserventils dem Zulaufdruck ausgesetzt sind, wobei der gesamte auf die erste Scheibe wirksame Anpreßdruck durch die hydraulischen Gegenkräfte höchstens kompensiert ist, denen der die Vertiefungen überdeckende Dichtflächenbereich der jeweils anderen Scheibe sowie der entsprechende Bodenbereich der Vertiefungen vorzugsweise auch im geöffneten Zustand des Wasserventils ausgesetzt sind.

3. Sanitäres Wasserventil nach Anspruch 1 oder 2, **dadurch gekennzeichnet, daß** zusätzlich zu den in der Dichtfläche (17) der beweglichen Scheibe (8) angeordneten Vertiefungen (22) ebenfalls in der Dichtfläche (20) der unbeweglichen Scheibe (5) Vertiefungen angeordnet sind.

4. Sanitäres Wasserventil nach einem der Ansprüche 1 bis 3, **dadurch gekennzeichnet, daß** die Vertiefungen (22) von länglicher Gestalt sind und im geschlossenen Zustand des Wasserventils zu mindestens 1/3 von der Dichtfläche (20) der ersten unbeweglichen Scheibe (5) und also zu höchstens 2/3 vom freien Querschnitt der Einlaßöffnungen (6, 7) überdeckt sind.

5. Sanitäres Wasserventil nach Anspruch 4, **dadurch gekennzeichnet, daß** zwei Vertiefungen (22) in symmetrischer Anordnung zur Mittellinie (23) der zweiten Scheibe (8) vorgesehen sind.

## Claims

1. Sanitary water valve, in particular a single-lever mixer, having control elements formed by at least two discs (5, 8), of which a first disc (5) is disposed in a fixed manner as a valve seat disc and has inlet openings (6, 7) for cold and hot water, which at the one side are connected to the water intakes and at the other side are directed towards a second disc (8) as a control disc, which is disposed in a movable manner on the first disc (5) and has a surface channel (9) for deflection functions, which is movable so as to simultaneously overlap the inlet openings (6, 7) and an outlet opening (10) situated likewise in the first disc (5), wherein connection of the outlet opening (10) and of the inlet openings (6, 7) to the water outlet and the water intakes is effected by means of static seals (11, 12, 13), the diameter of which is greater than the free cross section of the respective opening (10, 6, 7), with the result that in the closed state of the water valve the first disc (5) is pressed against the second disc (8) by the bias of all of the annular seals (11, 12, 13) and by the hydraulic forces, which are effective in the surrounding region of the inlet openings (6, 7) delimited by the annular seals, reduced by the hydraulic counterforces, to which the regions of the sealing surface (17) of the second disc (8) closing the free cross section of the inlet openings (6, 7) are subjected to, while in the open state of the water valve additional hydraulic counterforces are effective, which are directed towards the base of the surface channel (9) and towards the region of the sealing surface (20) of the first disc (5) delimited by the surface channel (9), reduced by the hydraulic forces, to which the surrounding region of the outlet opening (10) delimited by the annular seal is subjected to, **characterized in that** the sealing surface (17) of the second movable disc (8) has one or more recesses (22), which extend as far as into the respective active region of the sealing surface (20) of the first immovable disc (5) and form with said sealing surface region (20) pocket-shaped chambers, which at least in the closed state of the water valve are subjected to the supply pressures, wherein the total pressure acting against the first disc (5) is at most compensated by the hydraulic counterforces, to which the sealing surface region (20) of the first disc (5) overlapping the recesses (22) and the corresponding base region (25) of the recesses (22) are subjected to preferably also in the open state of the water valve.

2. Sanitary water valve in the form of a single-lever or two-tap mixer having control elements formed by at least two discs, of which a first disc is disposed in a fixed manner as a valve seat disc and has at least one inlet opening for cold or hot water, which at the one side is connected to the water intake and at the other side is directed towards a second disc as a control disc, which is disposed in a movable manner on the first disc and has at least one outlet opening for cold or hot water, which is movable so as to overlap the inlet opening, wherein connection of the inlet opening to the water intake is effected by means of an annular seal, the diameter of which is greater than the free cross section of the inlet opening, with the result that in the closed state of the water valve the first disc is pressed against the second disc by the bias of the annular seal and by the hydraulic force, which is effective in the surrounding region of the inlet opening delimited by the annular seal, reduced by the hydraulic counterforce, to which the region of the sealing surface of the second disc closing the free cross section of the inlet opening is subjected to, while in the open state of the water valve, merely with partial opening of the latter, hydraulic counterforces are effective in accordance with the overlapping of the inlet opening by the sealing surface of the second disc, **characterized in that** the sealing surface of the second movable disc has one or more recesses, which extend as far as into the respective active sealing surface region of the first immovable disc and form with said sealing surface region pocket-shaped chambers, which at least in the closed state of the water valve are subjected to the supply pressure, wherein the total pressure acting against the first disc is at most compensated by the hydraulic counterforces, to which the sealing surface region of the respective other disc overlapping the recesses and the corresponding base region of the recesses are subjected to preferably also in the open state of the water valve.

3. Sanitary water valve according to claim 1 or 2, **characterized in that**, in addition to the recesses (22) disposed in the sealing surface (17) of the movable disc (8), recesses are disposed likewise in the sealing surface (20) of the immovable disc (5).

4. Sanitary water valve according to one of claims 1 to 3, **characterized in that** the recesses (22) are of an elongate shape and, in the closed state of the water valve, at least 1/3 of said recesses is overlapped by the sealing surface (20) of the first immovable disc (5) and hence at most 2/3 are overlapped by the free cross section of the inlet openings (6, 7).

5. Sanitary water valve according to claim 4, **characterized in that** two recesses (22) are provided in a symmetrical arrangement relative to the centre line (23) of the second disc (8).

## Revendications

1. Robinet d'eau sanitaire, en particulier robinet mitigeur à levier unique, avec des éléments de commande formés par au moins deux disques (5, 8), dont un premier disque (5) est monté fixe en tant que disque formant siège de soupape et présente des ouvertures d'arrivée (6, 7) pour l'eau froide et l'eau chaude, qui sont d'un côté raccordées aux arrivées d' eau, et de l'autre côté ajustées contre un deuxième disque (8) servant de disque de commande, lequel est monté mobile sur le premier disque (5) et présente un canal de surface (9) pour des fonctions de renvoi, qui peut être mis en coïncidence en même temps avec les ouvertures d'arrivée (6, 7) et une ouverture de sortie (10) qui se trouve également dans le premier disque (5), le raccordement de l'ouverture de sortie (10) et des ouvertures d'arrivée (6, 7) à la sortie d'eau et aux arrivées d'eau s'effectuant par des joints statiques (11, 12, 13), dont le diamètre est plus grand que la section libre de l'ouverture respective (10, 6, 7), moyennant quoi à l'état fermé du robinet d'eau, le premier disque (5) est poussé contre le deuxième disque (8) par la précharge de tous les joints annulaires (11, 12, 13) et par les forces hydrauliques qui agissent dans le domaine environnant limité par les joints annulaires des ouvertures d'arrivée (6, 7), diminuées des forces hydrauliques antagonistes auxquelles sont soumis les domaines de la surface d'étanchéité (17) du deuxième disque (8) qui ferment la section libre des ouvertures d'arrivée (6, 7), tandis qu'à l'état ouvert du robinet d'eau, des forces antagonistes supplémentaires entrent en action, qui sont dirigées contre le fond du canal de surface (9) et le domaine de la surface d'étanchéité (20) du premier disque (5) limité par le canal de surface (9), diminuées des forces hydrauliques auxquelles est soumis le domaine aux environs de l'ouverture de sortie (10) limité par le joint annulaire, **caractérisé en ce que** la surface d'étanchéité (17) du deuxième disque (8) mobile présente un ou plusieurs renfoncements (22) qui s'étendent jusque dans le domaine actif respectif de la surface d'étanchéité (20) du premier disque fixe (5) et qui forment avec ce domaine de la surface d'étanchéité (20) des compartiments en forme de poche qui, au moins à l'état fermé du robinet d'eau, sont soumis aux pressions d'arrivée, l'ensemble de la pression d'application agissant sur le premier disque (5) étant tout au plus compensé par les forces hydrauliques antagonistes, auxquelles sont soumis le domaine de la surface d'étanchéité (20) qui couvre les renfoncements (22), de même que le domaine correspondant du fond (25) des renfoncements (22), de préférence aussi à l'état ouvert du robinet d'eau.

2. Robinet d'eau sanitaire réalisé sous la forme d'un robinet mitigeur à un seul levier ou à deux manettes avec des éléments de commande constitués d'au moins deux disques, dont le premier disque est monté fixe comme disque formant siège de soupape et comporte au moins une ouverture d'arrivée pour l'eau froide ou l'eau chaude, qui est raccordée d'un côté à l'arrivée d'eau et est ajustée de l'autre côté contre un deuxième disque servant de disque de commande, qui est monté mobile sur le premier disque et présente au moins un ouverture de sortie pour l'eau froide ou chaude, ouverture qui peut être mise en coïncidence avec l'ouverture d'arrivée, le raccordement de l'ouverture d'arrivée à l'arrivée d'eau s'effectuant par un joint annulaire dont le diamètre est plus grand que la section libre de l'ouverture d'arrivée, ce qui fait qu'à l'état fermé du robinet d'eau, le premier disque est appuyé contre le deuxième disque par la précharge du joint annulaire et la force hydraulique qui agit dans le domaine de l'ouverture d'arrivée limité par le joint annulaire, réduites de la force hydraulique antagoniste à laquelle est soumis le domaine de la surface d'étanchéité du deuxième disque qui ferme la section libre de l'ouverture d'arrivée, tandis qu'à l'état ouvert du robinet d'eau, des forces hydrauliques antagonistes n'agissent en fonction du recouvrement de l'ouverture d'arrivée par la surface d'étanchéité du deuxième disque que pour une ouverture partielle de celui-ci, **caractérisé en ce que** la surface d'étanchéité du deuxième disque mobile présente un ou plusieurs renfoncements qui s'étendent jusque dans le domaine de la surface d'étanchéité respectivement actif du premier disque fixe et forment avec ce domaine de la surface d'étanchéité des compartiments en forme de poches, qui sont soumis à la pression d'arrivée au moins à l'état fermé du robinet d'eau, l'ensemble de la pression d'application qui agit sur le premier disque étant au plus compensé par les forces hydrauliques antagonistes, auxquelles sont exposés, de préférence aussi à l'état ouvert du robinet d'eau, le domaine de la surface d'étanchéité de l'autre disque respectif qui recouvre les renfoncements, ainsi que le domaine correspondant du fond des renfoncements.

3. Robinet d'eau sanitaire selon la revendication 1 ou 2, **caractérisé en ce qu'**en plus des renfoncements (22) ménagés dans la surface d'étanchéité (17) du disque mobile (8), des renfoncements sont également ménagés dans la surface d'étanchéité (20) du disque fixe (5).

4. Robinet d'eau sanitaire selon l'une des revendications 1 à 3, **caractérisé en ce que** les renfoncements (22) sont de forme allongée et **en ce que**, dans l'état fermé du robinet, ils sont recouverts pour 1/3 au minimum par la surface d'étanchéité (20) du premier disque fixe (5), et donc pour 2/3 au maximum par la section libre des ouvertures d'arrivée (6, 7).

5. Robinet d'eau sanitaire selon la revendication 4, **caractérisé en ce que** deux renfoncements (22) sont prévus selon une disposition symétrique par rapport à la ligne médiane (23) du deuxième disque (8).
